# EUROPEAN PATENT SPECIFICATION

(11) **EP 3 627 891 B1**
(45) Date of publication and mention of the grant of the patent: **20.07.2022**
(21) Application number: 17919660.5
(22) Date of filing: 04.08.2017
(51) Int. Cl.: H04W 36/00, H04W 36/36

(54) **COMMUNICATION METHOD, NETWORK DEVICE, AND TERMINAL DEVICE**
KOMMUNIKATIONSVERFAHREN, NETZWERKVORRICHTUNG UND ENDGERÄTEVORRICHTUNG
PROCÉDÉ DE COMMUNICATION, DISPOSITIF DE RÉSEAU ET DISPOSITIF TERMINAL

(43) Date of publication of application: 25.03.2020
(73) Proprietor: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan Guangdong 523860 (CN)
(74) Representative: Manitz Finsterwald Patent- und Rechtsanwaltspartnerschaft mbB
(86) International application number: PCT/CN2017/096082
(87) International publication number: WO 2019/024108

(56) References cited:
- WO-A1-2014/014275
- CN-A- 102 917 420
- CN-A- 103 797 849
- CN-A- 106 572 508
- US-A1- 2012 253 950
- US-A1- 2017 086 106
- US-A1- 2017 150 519
- Incorporated Qualcomm: "LTE Mobility Enhancements", , 27 February 2010 (2010-02-27), XP055666682, Retrieved from the Internet: URL:https://www.qualcomm.com/media/documen ts/files/lte-mobility-enhancements.pdf [retrieved on 2020-02-10]
- HUAWEI: "NG context fetch for inactive mode UE", 3GPP DRAFT; R3-171550 NG CONTEXT FETCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Hangzhou, China; 20170515 - 20170519 14 May 2017 (2017-05-14), XP051276337, Retrieved from the Internet: URL:http://www.3gpp.org/ftp/Meetings_3GPP_ SYNC/RAN3/Docs/ [retrieved on 2017-05-14]
- QUALCOMM INCORPORATED: "Context Retrieval in RRC_INACTIVE", 3GPP DRAFT; R3-172431_RRC_INACTIVE CONTEXT RETRIEVAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Qingdao, China; 20170627 - 20170629 26 June 2017 (2017-06-26), XP051302373, Retrieved from the Internet: URL:http://www.3gpp.org/ftp/Meetings_3GPP_ SYNC/RAN3/Docs/ [retrieved on 2017-06-26]

## Description

### TECHNICAL FIELD

Embodiments of the invention relate to the field of communications, and more particularly to a communication method, a network device and a terminal device.

### BACKGROUND

In an existing Long Term Evolution (LTE) system, after a terminal device establishes a connection with a network, a network device serving the terminal device may create corresponding service information for the terminal device. When the terminal device that is using a network service moves, the terminal device is required to recover a connection between the terminal device and the network device by handover, to ensure continuity of the communication and quality of service. A solution in a related art is high in network overhead.

Qualcomm Incorporated: "LTE Mobility Enhancements", 27 February 2010 (2010-02-27), XP055666682, discusses the LTE handover procedures that are standardized in 3GPP Release 8 and describes a new LTE handover procedure called Forward handover which improves the overall handover performance in LTE systems.

WO 2014/014275 A1 provides a method and an apparatus for transmitting control information in a heterogeneous network system.

### SUMMARY

The present invention is defined in the independent claims. In view of this, the invention provides a communication method, a network device and a terminal device, so as to save power of a terminal and reduce a network overhead, thereby improving mobility performance of the terminal.

In a first aspect, a communication method is defined in claim 1.

When the terminal device moves to a different PLMN or a different core network, the target network device may directly acquire the context information of the terminal device without performing handover with the terminal device, so as to recover a connection with the terminal device, so that power of the terminal is saved, a network overhead is reduced, and mobility performance of the terminal is further improved.

In a possible implementation, after the operation that the target network device receives the context information of the terminal device, the method may further include the following operation. The target network device sends second indication information to the terminal device. The second indication information is to indicate that the target network device has acquired the context information.

In a second aspect, a communication method is defined in claim 3.

In a third aspect, a target network device is defined in claim 4.

In a fourth aspect, a terminal device is defined in claim 5.

These or other aspects of the invention will become clearer and easier to understand through the following descriptions about the examples.

### BRIEF DESCRIPTION OF DRAWINGS

FIG. 1 is a schematic diagram showing an implementation environment involved in an example not being part of the invention.
FIG. 2 is a schematic flowchart showing a cell handover method not being part of the invention.
FIG. 3 is a schematic flowchart showing a communication method according to an example not being part of the invention.
FIG. 4 is another schematic flowchart showing a communication method according to an example not being part of the invention.
FIG. 5 is yet another schematic flowchart showing a communication method according to an example not being part of the invention.
FIG. 6 is yet another schematic flowchart showing a communication method according to an example not being part of the invention.
FIG. 7 is yet another schematic flowchart showing a communication method according to an example not being part of the invention.
FIG. 8 is yet another schematic flowchart showing a communication method according to an example not being part of the invention.
FIG. 9 is a schematic block diagram showing a network device according to an example not being part of the invention.
FIG. 10 is another schematic block diagram showing a network device according to an example not being part of the invention.
FIG. 11 is a schematic block diagram showing a terminal device according to an example not being part of the invention.
FIG. 12 is yet another schematic block diagram showing a network device according to an example not being part of the invention.
FIG. 13 is yet another schematic block diagram showing a network device according to an example not being part of the invention.
FIG. 14 is another schematic block diagram showing a terminal device according to an example not being part of the invention.

### DETAILED DESCRIPTION

The technical solutions in the examples of the invention will be clearly and completely described below in combination with the drawings in the examples of the invention.

It is to be understood that the technical solutions in the examples of the invention may be applied to various communication systems, for example, a Global System of Mobile communication (GSM), a Code Division Multiple Access (CDMA) system, a Wideband Code Division Multiple Access (WCDMA) system, a General Packet Radio Service (GPRS) system, an LTE system, an LTE Frequency Division Duplex (FDD) system, LTE Time Division Duplex (TDD) system, a Universal Mobile Telecommunication System (UMTS), a Worldwide Interoperability for Microwave Access (WiMAX) communication system or a future New Radio (NR) system.

In particular, the technical solutions in the examples of the invention may be applied to various non-orthogonal multiple access technology-based communication systems, for example, a Sparse Code Multiple Access (SCMA) system and a Low Density Signature (LDS) system, and of course, the SCMA system and the LDS system may also have other names in the field of communication. Furthermore, the technical solutions in the examples of the invention may be applied to a multi-carrier transmission system adopting a non-orthogonal multiple access technology, for example, Orthogonal Frequency Division Multiplexing (OFDM), Filter Bank Multi-Carrier (FBMC), Generalized Frequency Division Multiplexing (GFDM) and Filtered-OFDM (F-OFDM) systems adopting the non-orthogonal multiple access technologies.

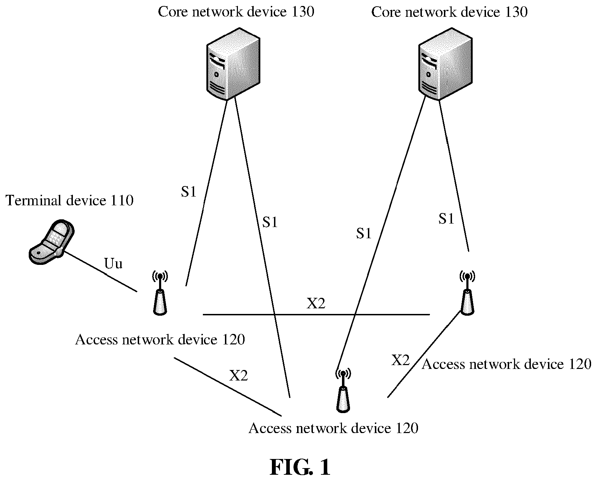

FIG. 1 is a schematic diagram showing an implementation environment involved in an example not being part of the invention. The implementation environment includes a terminal device 110, access network devices 120 and core network devices 130. An S1 interfaces is configured for communication between the access network device and the core network device, an X2 interface is configured for communication between the access network devices, and a Uu interface is configured for communication between the terminal device and the access network device.

In the example not being part of the invention, the terminal device 110 may communicate with one or more core networks through a Radio Access Network (RAN). The terminal device may be called an access terminal, User Equipment (UE), a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a Session Initiation Protocol (SIP) phone, a Wireless Local Loop (WLL) station, a Personal Digital Assistant (PDA), a handheld device with a wireless communication function, a computing device or another processing device connected to a wireless modem, a vehicle-mounted device, a wearable device, a terminal device in a future 5th Generation (5G) network and the like.

The access network device 120 is a network element in an access network. As shown in FIG. 1, for example, in the UMTS, the access network device 120 may be a Node Base (NB) and may also be a Radio Network Controller (RNC). In a wireless LTE network architecture, a base station may be an Evolved Node Base station (eNB).

The core network device 130 is a network element in a Core Network (CN). For example, in the wireless LTE network architecture, the core network device 130 includes a Mobility Management Entity (MME), a Serving Gateway (S-GW) and a Packet Data Network Gateway (P-GW). The MME is mainly configured to complete mobility management and session management of the terminal device 110. The S-GW is mainly responsible for forwarding data between the eNB and the P-GW. The P-GW is mainly responsible for processing an Internet Protocol (IP) data service.

In an existing LTE system, after the terminal device establishes a connection with a network, the network device serving the terminal device may create corresponding service information for the terminal device. When the terminal device that is using a network service moves from one PLMN to another PLMN or moves from one core network to another core network, the terminal device is required to recover a connection between the terminal device and the network device by handover, to ensure a continuity of the communication and quality of service.

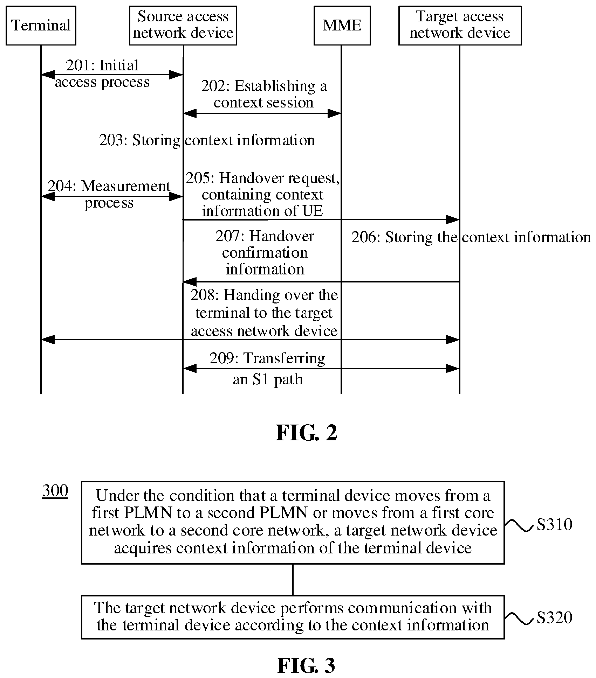

For ease of understanding, a cell handover method will be simply introduced at first in combination with FIG. 2. FIG. 2 is a schematic flowchart showing a cell handover method. The method shown in FIG. 2 includes the following operations.

In 201, a terminal completes an initial access process with a source access network device (an access network device to which a source cell belongs). In such case, the terminal enters a connected state from an idle state.

In 202, the source access network device establishes a context session with an MME to which the terminal belongs and acquires context information of the terminal.

In 203, the source access network device stores the context information of the terminal.

In 204, the terminal completes a measurement process for a neighbor cell. The terminal measures a measurement object according to configuration information sent by the source access network device and sends a measurement report to the source access network device to enable the access network device to determine whether to perform cell handover on the terminal or not according to the measurement report.

In 205, when the source access network device determines that the terminal is required to be handed over, the source access network device sends a handover request to a target access network device, the handover request containing the context information of the terminal.

In 206, the target access network device stores the context information of the terminal.

In 207, the target access network device sends a handover confirmation request to the source access network device.

In 208, the source access network device hands over the terminal to the target access network device.

In 209, an S1 path is transferred from the source access network device to the target access network device. After the terminal accesses the target access network device, the target access network device may send a path switch request to a core network element for the purpose of notifying the core network element to transfer a service of the terminal to the target access network device and update node relationships in a user plane and a control plane.

From the solution, it can be seen that when the terminal device moves from the cell covered by the source access network device to a cell covered by the target access network device, the terminal device recovers a connection between the terminal device and an access network entity in a handover manner. The terminal device is required to notify the source access network device at first and then the source access network device requests the target access network device for handover and contains the context information of the terminal device. The terminal device is required to interact with the source access network for many times to recover the connection, which consumes relatively more resources.

In a research on the evolution of LTE and future wireless system, a terminal in a connected state may autonomously move without handover, and a movement method used therein is similar to cell selection or cell reselection in an LTE network. That is, the terminal autonomously moves according to a parameter set by a network without notifying the network (the difference from the handover). When the terminal moves to a different core network or a different PLMN, the context information of the terminal device is stored in the terminal device itself, or optionally in an access network device or a core network device or a PLMN device that previously served the terminal device. When the terminal device needs to transmit data in a current core network or PLMN, a current network device acquires the context information of the terminal device from the terminal device to recover transmission.

It is to be understood that terms "system" and "network" are herein often used interchangeably. In the invention, the term "and/or" is only used to describe an association relationship between associated objects and represents that three relationships may exist. For example, A and/or B may represent three conditions: i.e., independent existence of A, existence of both A and B and independent existence of B. In addition, the character "/" in the invention usually represents that previous and next associated objects form an "or" relationship.

FIG. 3 is a schematic flowchart showing a communication method 300 according to an example not being part of the invention. As shown in FIG. 3, the communication method 300 includes part or all of the following contents.

At S310, under the condition that a terminal device moves from a first PLMN to a second PLMN or moves from a first core network to a second core network, a target network device acquires context information of the terminal device.

At S320, the target network device communicates with the terminal device according to the context information.

The example not being part of the invention may be applied to a scenario in which the terminal device is connected with the target network device and the context information of the terminal device is stored in a source network device. In other words, any network device storing the context information of the terminal device may be determined as the source network device in the example not being part of the invention.

It is to be understood that the network device in the example not being part of the invention may be an access network device, may also be a core network device or may further be a PLMN device. That is, the source network device and the target network device may be different access network devices, or the source network device and the target network device may be different core network devices, or the source network device and the target network device may be different PLMN devices and the core networks to which they belong may be the same or different. It is also to be understood that, in the example not being part of the invention, a function implemented by the PLMN device is similar to that implemented by the core network device. Descriptions will be made below mainly with the core network device as an example and the PLMN device may refer to specific implementation of the core network device.

Specifically, if the terminal device determines that the core network or PLMN to which it presently moves is different from the previous one, the terminal device may establish the context information of the terminal device without performing signaling interaction with the network device, and the target network device acquires the context information of the terminal device from the terminal device. For example, if the terminal device has uplink data to be sent and the context information of the terminal device is stored in the terminal device, the terminal device may directly send the context information thereof to the target access network device. In this way, the network device may recover transmission with the terminal device quickly and the terminal device may directly send the uplink data to the network device.

In such a manner, according to the communication method in the example of the invention, when the terminal device moves to a different PLMN or a different core network, the target network device may directly acquire the context information of the terminal device without performing handover with the terminal device, so as to recover a connection with the terminal device, so that power of the terminal is saved, a network overhead is reduced, and mobility performance of the terminal is further improved.

Optionally, in the example not being part of the invention, the context information of the terminal device may be stored in the terminal device, the source access network device and the source core network device. The target network device acquires the context information of the terminal from the terminal device.

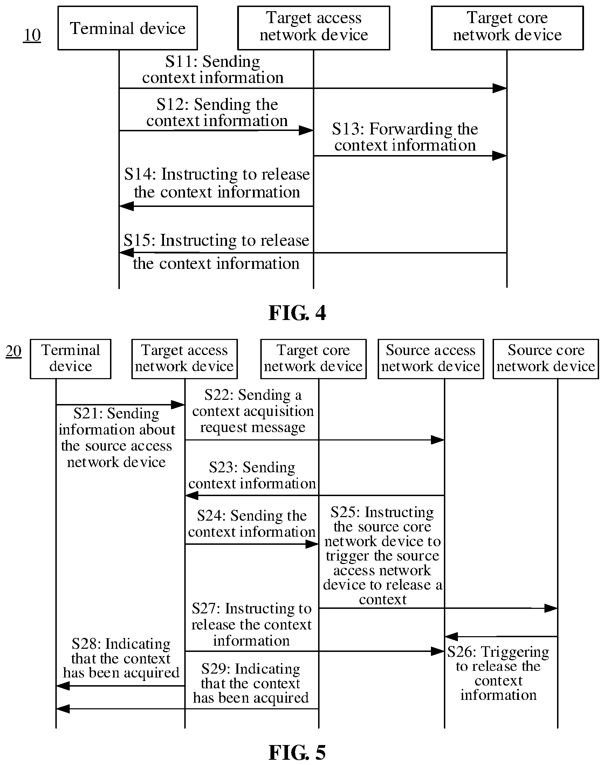

Specific flows that the target network device acquires the context information of the terminal device from the terminal device, the source access network device and the source core network device will be described below in combination with FIG. 4 to FIG. 6 respectively.

FIG. 4 is a schematic flowchart showing a communication method 10 according to an example not being part of the invention. The method 10 is applied to a scenario in which the context information of the terminal device is stored in the terminal device. As shown in FIG. 4, the method 10 may include part or all of the following contents.

At S11, the terminal device may directly send the context information of the terminal device to the target access network device when the terminal device determines that it moves to a different core network.

At S 12, the target access network device, after receiving the context information of the terminal device from the terminal device, may forward the context information of the terminal device to the target core network device.

At S13, the terminal device directly sends the context information of the terminal device to the target core network device when the terminal device determines that it moves to a different core network.

At S14, the target access network device, after receiving the context information of the terminal device from the terminal device, may send indication information to the terminal device to instruct the terminal device to release the context information.

At S15, the target core network device, after receiving the context information sent by the terminal device or forwarded by the target access network device, sends indication information to the terminal device to instruct the terminal device to release the context information.

It is to be understood that, in various examples not being part of the invention, a magnitude of a sequence number of each process does not mean a sequence of execution and the sequence of execution of each process should be determined by its function and an internal logic, and should not limit an implementation process of the invention.

FIG. 5 is a schematic flowchart showing a communication method 20 according to an example not being part of the invention. The method 20 is applied to a scenario in which the context information of the terminal device is stored in the source access network device. As shown in FIG. 5, the method 20 may include part or all of the following contents.

At S21, the terminal device may send some information about the source access network device to the target access network device when the terminal device determines that it moves to a different core network, and the information can be used by the target access network device to find the source access network device. For example, the information may be an identifier allocated to the source access network device by the core network device, and may also be an identifier of a path between the terminal device and the source access network device or an identifier of a path between the core network device and the source access network device. Any information capable of identifying the source access network device may be determined as the identification information in the example not being part of the invention. There are no limits made thereto in the invention.

At S22, the target access network device, after receiving the information about the source access network device, may send a context acquisition request message to the source access network device. Optionally, the context acquisition request message may contain identification information of the terminal device. For example, the identification information of the terminal device may be an identifier allocated to the terminal device by the source access network device, may also be a Globally Unique Temporary UE Identity (GUTI), and may further be another terminal identifier such as an International Mobile Subscriber Identification Number (IMSI). Any information capable of identifying the terminal device may be determined as the identification information in the example not being part of the invention.

At S23, the source access network device, after receiving the context acquisition request message sent by the target access network device, may search the context information of the terminal device at first according to the identification information of the terminal device contained therein and then send the searched out context information to the target access network device.

At S24, after the target access network device receives the context information of the terminal device from the source access network device, the target access network device may forward the context information to the target core network device.

At S25, the target core network device, after receiving the context information of the terminal device forwarded by the target access network device, may send indication information to the source core network device, and the indication information is to instruct the source core network device to trigger the source access network device to release the context information of the terminal device.

At S26, after the source core network device receives the indication information sent by the target core network device, the source core network device may send indication information to the source access network device to instruct the source access network device to release the context information of the terminal device.

At S27, the target access network device, after receiving the context information of the terminal device from the source access network device, may directly instruct the source access network device to release the context information of the terminal device.

At S28, the target access network device, after receiving the context information of the terminal device from the source access network device, may also send indication information to the terminal device to notify the terminal device that the target access network device has acquired the context information of the terminal device, namely notifying the terminal device that the target access network device has been ready for communication with the terminal device.

At S29, the target core network device, after receiving the context information of the terminal device forwarded by the target access network device, may also send indication information to the terminal device to notify the terminal device that the target core network device has acquired the context information of the terminal device, namely notifying the terminal device that the target core network device has been ready for communication with the terminal device.

Optionally, the terminal device may directly report the information about the source core network device to the target core network device. The target core network device may send the context acquisition request message to the source core network device according to the reported information about the source core network device. The source core network device may directly forward the context acquisition request message to the source access network device, and may also send another context acquisition request message to the source access network device. The context acquisition request message sent to the source access network device by the source core network device may contain the identifier of the terminal device, and the identifier may be different from or the same as the identifier of the terminal device in the context acquisition request message sent to the source core network device by the target core network device. The context acquisition request message sent to the source access network device by the source core network device may also not contain the identifier of the terminal device. There are no limits made in the invention. The source access network device, after receiving the context acquisition request message sent by the source core network device, may send the context information of the terminal device to the source core network device. The source core network device may further forward the context information to the target core network device, and furthermore, the target core network device may forward the context information to the target access network device.

It is to be understood that, in various examples not being part of the invention, a magnitude of a sequence number of each process does not mean a sequence of execution, and the sequence of execution of each process should be determined by its function and an internal logic and should not limit an implementation process of the invention.

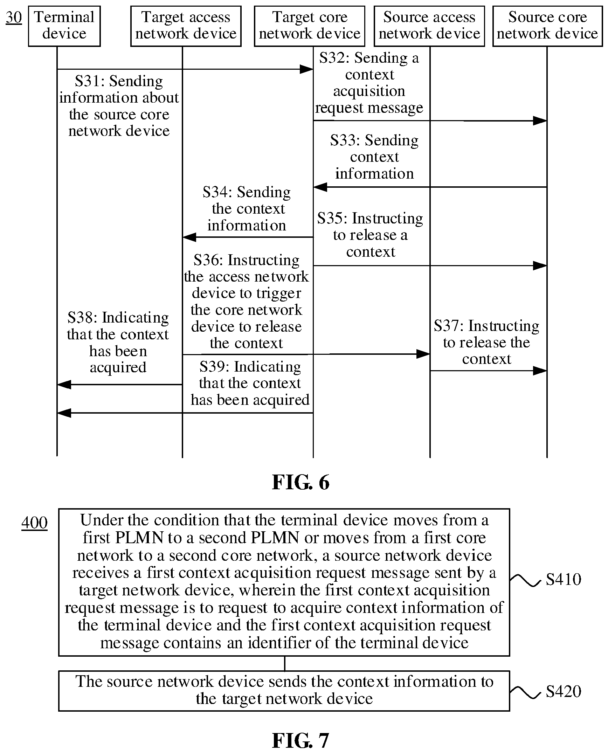

FIG. 6 is a schematic flowchart showing a communication method 30 according to an example not being part of the invention. The method 30 is applied to a scenario in which the context information of the terminal device is stored in the source core network device. As shown in FIG. 6, the method 30 includes part or all of the following contents.

At S31, the terminal device may send some information about the source core network device to the target core network device when the terminal device determines that it moves to a different core network, and the information can be used by the target core network device to find the source core network device.

At S32, the target core network device, after receiving the information about the source core network device, may send a context acquisition request message to the source core network device. Optionally, the context acquisition request message may contain identification information of the terminal device. For example, the identification information of the terminal device may be an identifier allocated to the terminal device by the source access network device, may also be a GUTI, and may further be another terminal identifier such as an IMSI. Any information capable of identifying the terminal device may be determined as the identification information in the example not being part of the invention.

At S33, the source core network device, after receiving the context acquisition request message sent by the target core network device, may search the context information of the terminal device at first according to the contained identification information of the terminal device and then send the searched out context information to the target core network device.

At S34, after the target core network device receives the context information of the terminal device from the source core network device, the target core network device may forward the context information to the target access network device.

At S35, the target core network device, after receiving the context information, forwarded by the target access network device, of the terminal device, may send indication information to the source core network device to instruct the source core network device to directly release the context information of the terminal device.

At S36, the target access network device, after receiving the context information, forwarded by the target core network device, of the terminal device, may send indication information to the source access network device, and the indication information is to instruct the source access network device to trigger the source core network device to release the context information of the terminal device.

At S37, the source access network device, after receiving the indication information, which instructs the source access network device to trigger the source core network device to release the context information, from the target access network device, may directly send indication information to the source core network device to instruct the release of the context information.

At S3 8, the target access network device, after receiving the context information, forwarded by the target core network device, of the terminal device, may send indication information to the terminal device to notify the terminal device that the target access network device has acquired the context information of the terminal device, namely notifying the terminal device that the target access network device has been ready for communication with the terminal device.

At S39, the target core network device, after receiving the context information of the terminal device from the source core network device, may also send indication information to the terminal device to notify the terminal device that the target core network device has acquired the context information of the terminal device, namely notifying the terminal device that the target core network device has been ready for communication with the terminal device.

It is to be understood that, in various examples not being part of the invention, a magnitude of a sequence number of each process does not mean a sequence of execution, and the sequence of execution of each process should be determined by its function and an internal logic and should not limit an implementation process of the invention.

It is to be understood that the method 10, the method 20 and the method 30 are described in terms of storing the context information in one device and the invention should not be limited thereto. For example, the context information of the terminal device may be stored in the terminal device and the source access network device, and in such case, the terminal device directly sends the context information of the terminal device to the target core network device, in an example not being part of the invention, the terminal device may also send some information about the source access network device to the target access network device to enable the target access network device to acquire the context information of the terminal device from the source access network device.

It is also to be understood that the above descriptions are made with the core network device as an example. Since the functions of the PLMN device are similar to that of the core network device, elaborations are omitted herein.

It is also to be understood that the context information of the terminal device or the information about the source network device sent to the target network device by the terminal device may be carried in a random access request message, i.e., a resource request for uplink transmission sent to the target access network device. In such case, the terminal device may be in an idle state and the context information of the terminal device is stored in the terminal device or the source access network device or the source core network device (PLMN device). The terminal device may also be in an RRC inactive state and the context information of the terminal device is stored in the terminal device or the source access network device or the source core network device (PLMN device). A state of the terminal device is not limited in the invention.

FIG. 7 is a schematic flowchart showing a communication method 400 according to an example not being part of the invention. As shown in FIG. 7, the method 400 includes part or all of the following contents.

At S410, under the condition that a terminal device moves from a first PLMN to a second PLMN or moves from a first core network to a second core network, a source network device receives a first context acquisition request message sent by a target network device, the first context acquisition request message is to request to acquire context information of the terminal device and the first context acquisition request message contain an identifier of the terminal device.

At S420, the source network device sends the context information to the target network device.

In such a manner, according to the communication method in the example not being part of the invention, when the terminal device moves to a different PLMN or a different core network, the source network device, after receiving the context acquisition request message sent by the target network device, sends the context information of the terminal device to the target network device to recover a connection between the terminal device and the network device, so that power of the terminal is saved, a network overhead is reduced, and mobility performance of the terminal is further improved.

Optionally, in the example not being part of the invention, the source network device is a source core network device, the target network device is a target core network device, and the method further includes the following operations. The source core network device sends a second context acquisition request message to a source access network device, the second context acquisition request message being to request to acquire the context information. The source core network device receives the context information sent by the source access network device.

Optionally, in the example not being part of the invention, the source network device is the source core network device, the target network device is the target core network device, and after the operation that the source core network device sends the context information to the target core network device, the method further includes the following operations. The source core network device receives first indication information sent by the target core network device, the first indication information being to instruct the source core network device to release the context information or instruct the source core network device to trigger the source access network device to release the context information. The source core network device releases the context information according to the first indication information, or the source core network device forwards the first indication information to the source access network device.

Optionally, in the example not being part of the invention, the source network device is a source PLMN device, the target network device is a target PLMN device, and the method further includes the following operations. The source PLMN device sends a second context acquisition request message to the source access network device, the second context acquisition request message being to request to acquire the context information. The source PLMN device receives the context information sent by the source access network device.

Optionally, in the example not being part of the invention, the source network device is the source PLMN device, the target network device is the target PLMN device, and after the operation that the source PLMN device sends the context information to the target PLMN device, the method further includes the following operations. The source PLMN device receives second indication information sent by the target PLMN device, the second indication information being to instruct the source PLMN device to release the context information or instruct the source PLMN device to trigger the source access network device to release the context information. The source PLMN device releases the context information according to the second indication information, or the source PLMN device forwards the second indication information to the source access network device.

Optionally, in the example not being part of the invention, the source network device is the source access network device, the target network device is a target access network device, and the method further includes the following operations. The source access network device sends a second context acquisition request message to the source core network device or the source PLMN device, the second context acquisition request message being to request to acquire the context information. The source access network device receives the context information sent by the source core network device or the source PLMN device.

Optionally, in the example not being part of the invention, the source network device is the source access network device, the target network device is the target access network device, and after the operation that the source access network device sends the context information to the target access network device, the method further includes the following operations. The source access network device receives third indication information sent by the target access network device, the third indication information being to instruct the source access network device to release the context information or instruct the source access network device to trigger the source core network device or the source PLMN device to release the context information. The source access network device releases the context information according to the third indication information, or the source access network device forwards the third indication information to the source core network device or the source PLMN device.

In the example of the invention, the terminal device is a terminal device in an RRC inactive state.

It is to be understood that interaction between the network device and the target network device and related characteristics, functions and the like described with reference to the source network device correspond to related characteristics and functions of the target network device. That is, if the target network device sends information to the source network device, the source network device may correspondingly receive the information. For simplicity, no more elaborations will be made herein.

It is also to be understood that, in various examples not being part of the invention, a magnitude of a sequence number of each process does not mean a sequence of execution, and the sequence of execution of each process should be determined by its function and an internal logic and should not limit an implementation process of the invention.

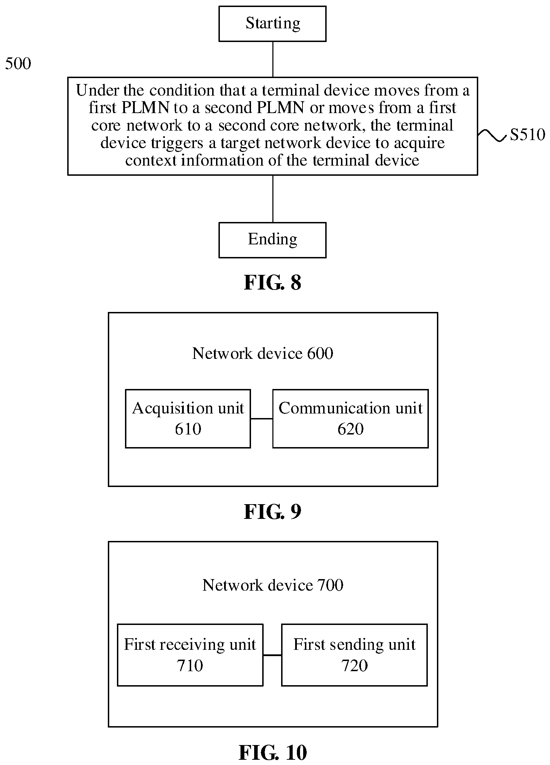

FIG. 8 is a schematic flowchart showing a communication method 500 according to an example not being part of the invention. As shown in FIG. 8, the method 500 includes part or all of the following contents.

At S510, under the condition that a terminal device moves from a first PLMN to a second PLMN or moves from a first core network to a second core network, the terminal device triggers a target network device to acquire context information of the terminal device.

In such a manner, according to the communication method in the example not being part of the invention, when the terminal device moves to a different PLMN or a different core network, the terminal device triggers the target access network device to acquire the context information of the terminal device to recover a connection between the terminal device and the network device, so that power of the terminal is saved, a network overhead is reduced, and mobility performance of the terminal is further improved.

In the example of the invention, the operation that the terminal device triggers the target network device to acquire the context information of the terminal device includes the following action. The terminal device sends the context information to the target network device.

In the example of the invention, after the operation that the terminal device sends the context information to the target network device, the method further includes the following operations. The terminal device receives indication information sent by the target network device, the indication information being to instruct the terminal device to release the context information. The terminal device releases the context information according to the indication information.

Optionally, in the example not being part of the invention, the operation that the terminal device triggers the target network device to acquire the context information of the terminal device includes the following action. The terminal device sends information about a source network device to the target network device to enable the target network device to acquire the context information from the source network device.

In the example of the invention, the target network device is a target core network device and the source network device is a source core network device. In an example, the target network device is a target PLMN device and the source network device is a source PLMN device. In an example not being part of the invention, the target network device is a target access network device and the source network device is a source access network device.

In the example of the invention, the terminal device is a terminal device in an RRC inactive state.

It is to be understood that interaction between the terminal device and the network device and related properties, functions and the like described with reference to the terminal device correspond to related properties and functions of the network device. That is, if the terminal device sends information to the network device, the network device may correspondingly receive the information. For simplicity, no more elaborations will be made herein.

The communication method according to the examples of the invention is described above in detail and a communication device according to the examples not being part of the invention will be described below in combination with FIG. 6 to FIG. 11. The technical characteristics described in the methods are applied to the following devices.

FIG. 9 is a schematic block diagram showing a network device 600 according to an example not being part of the invention. The network device is a target network device. As shown in FIG. 9, the network device 600 includes an acquisition unit 610 and a communication unit 620.

The acquisition unit 610 is configured to, under the condition that a terminal device moves from a first PLMN to a second PLMN or moves from a first core network to a second core network, acquire context information of the terminal device.

The communication unit 620 is configured to perform communication with the terminal device according to the context information.

In such a manner, according to the network device in the example not being part of the invention, when the terminal device moves to a different PLMN or a different core network, the target network device may directly acquire the context information of the terminal device without performing handover with the terminal device, so as to recover a connection with the terminal device, so that power of the terminal is saved, a network overhead is reduced, and mobility performance of the terminal is further improved.

Optionally, in the example not being part of the invention, the acquisition unit is specifically configured to receive the context information sent by the terminal device.

Optionally, in the example not being part of the invention, the network device further includes a first sending unit. The first sending unit is configured to send first indication information to the terminal device, and the first indication information is to instruct the terminal device to release the context information.

Optionally, in the example not being part of the invention, the network device further includes a first receiving unit. The first receiving unit is configured to receive information about a source network device from the terminal device. The acquisition unit is specifically configured to send a context acquisition request message to the source network device according to the information about the source network device and receive the context information sent by the source network device. The context acquisition request message is to request for the context information and the context acquisition request message contains an identifier of the terminal device.

Optionally, in the example not being part of the invention, the target network device is a target core network device, the source network device is a source core network device, and the network device further includes a second sending unit, configured to send the context information to a target access network device.

Optionally, in the example not being part of the invention, the network device further includes a third sending unit, configured to send second indication information to the source core network device. The second indication information is to instruct the source core network device to release the context information or instruct the source core network device to trigger the source access network device to release the context information.

Optionally, in the example not being part of the invention, the target network device is a target PLMN device, the source network device is a source PLMN device, and the network device further includes a fourth sending unit, configured to send the context information to the target access network device.

Optionally, in the example not being part of the invention, the network device further includes a fifth sending unit, configured to send third indication information to the source PLMN device. The third indication information is to instruct the source PLMN device to release the context information or instruct the source PLMN device to trigger the source access network device to release the context information.

Optionally, in the example not being part of the invention, the target network device is the target access network device, the source network device is the source access network device, and the network device further includes a sixth sending unit, configured to send the context information to the target core network device or the target PLMN device.

Optionally, in the example not being part of the invention, the network device further includes a seventh sending unit, configured to send fourth indication information to the source access network device. The fourth indication information is to instruct the source access network device to release the context information or instruct the source access network device to trigger the source core network device to release the context information.

Optionally, in the example not being part of the invention, the network device further includes an eighth sending unit, configured to send fifth indication information to the terminal device. The fifth indication information is to indicate that the target network device has acquired the context information.

In the example of the invention, the terminal device is a terminal device in an RRC inactive state.

It is to be understood that the network device 600 according to the example not being part of the invention may correspond to the target network device in the method of the invention. The abovementioned and other operations and/or functions of each unit in the network device 600 are used to implement the corresponding flows executed by the target network device in the method shown in FIG. 3 respectively and will not be elaborated herein for simplicity.

FIG. 10 is a schematic block diagram showing a network device 700 according to an example not being part of the invention. The network device is a source network device. As shown in FIG. 10, the network device 700 includes a first receiving unit 710 and a first sending unit 720.

The first receiving unit 710 is configured to, under the condition that a terminal device moves from a first PLMN to a second PLMN or moves from a first core network to a second core network, receive a first context acquisition request message sent by a target network device. The first context acquisition request message is to request to acquire context information of the terminal device and the first context acquisition request message contains an identifier of the terminal device.

The first sending unit 720 is configured to send the context information to the target network device.

In such a manner, according to the network device in the example not being part of the invention, when the terminal device moves to a different PLMN or a different core network, the source network device, after receiving the context acquisition request message sent by the target network device, sends the context information of the terminal device to the target network device to recover a connection between the terminal device and the network device, so that power of the terminal is saved, a network overhead is reduced, and mobility performance of the terminal is further improved.

Optionally, in the example not being part of the invention, the source network device is a source core network device or a source PLMN device, the target network device is a target core network device or a target PLMN device, and the network device further includes a second sending unit and a second receiving unit. The second sending unit is configured to send a second context acquisition request message to the source access network device, and the second context acquisition request message is to request to acquire the context information. The second receiving unit is configured to receive the context information sent by the source access network device.

Optionally, in the example not being part of the invention, the source network device is the source core network device or the source PLMN device, the target network device is the target core network device or the target PLMN device, and the network device further includes a third receiving unit and a first release unit. The third receiving unit is configured to receive first indication information sent by the target core network device, and the first indication information is to instruct the source core network device to release the context information or instruct the source core network device to trigger the source access network device to release the context information. Optionally, the third receiving unit is configured to receive first indication information sent by the target PLMN device, and the first indication information is to instruct the source PLMN device to release the context information. The first release unit is configured to release the context information according to the first indication information. Optionally, the network device further includes a third sending unit, configured to forward the first indication information to the source access network device.

Optionally, in the example not being part of the invention, the source network device is the source access network device, the target network device is a target access network device, and the network device further includes a fourth sending unit and a fourth receiving unit. The fourth sending unit is configured to send a second context acquisition request message to the source core network device or the source PLMN device, and the second context acquisition request message is to request to acquire the context information. The fourth receiving unit is configured to receive the context information sent by the source core network device or the source PLMN device.

Optionally, in the example not being part of the invention, the source network device is the source access network device, the target network device is the target access network device, and the network device further includes a fifth receiving unit and a second release unit. The fifth receiving unit is configured to receive third indication information sent by the target access network device. The third indication information is to instruct the source access network device to release the context information or instruct the source access network device to trigger the source core network device or the source PLMN device to release the context information. The second release unit is configured to release the context information according to the third indication information. Optionally, the network device further includes a fifth sending unit, configured to forward the third indication information to the source core network device or the source PLMN device.

In the example of the invention, the terminal device is a terminal device in an RRC inactive state.

It is to be understood that the network device 700 according to the example not being part of the invention may correspond to the source network device in the method of the invention. The abovementioned and other operations and/or functions of each unit in the network device 700 are used to implement the corresponding flows executed by the source network device in the method shown in FIG. 4 respectively and will not be elaborated herein for simplicity.

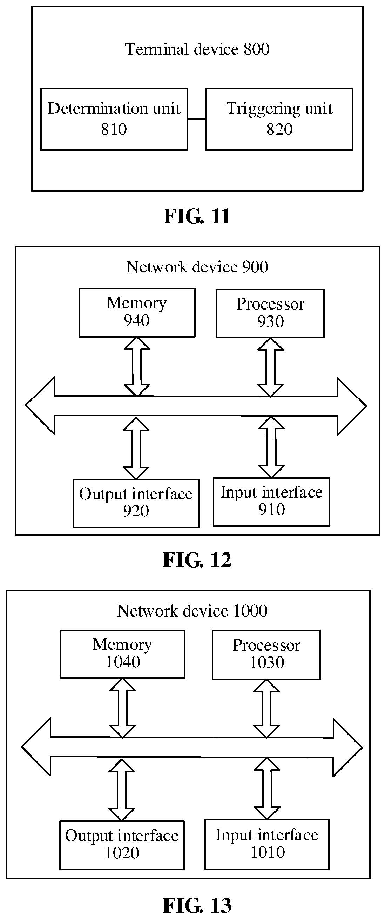

FIG. 11 is a schematic block diagram showing a terminal device 800 according to an example not being part of the invention. As shown in FIG. 11, the terminal device 800 includes a determination unit 810 and a triggering unit 820.

The determination unit 810 is configured to determine that the terminal device moves from a first PLMN to a second PLMN or moves from a first core network to a second core network.

The triggering unit 820 is configured to trigger a target network device to acquire context information of the terminal device.

In such a manner, according to the terminal device in the example not being part of the invention, when the terminal device moves to a different PLMN or a different core network, the terminal device triggers the target access network device to acquire the context information of the terminal device to recover a connection between the terminal device and the network device, so that power of the terminal is saved, a network overhead is reduced, and mobility performance of the terminal is further improved.

Optionally, in the example not being part of the invention, the triggering unit is specifically configured to send the context information to the target network device.

Optionally, in the example not being part of the invention, the terminal device further includes a receiving unit and a release unit. The receiving unit is configured to receive indication information sent by the target network device, and the indication information is to instruct the terminal device to release the context information. The release unit is configured to release the context information according to the indication information.

Optionally, in the example not being part of the invention, the triggering unit is specifically configured to send information about a source network device to the target network device to enable the target network device to acquire the context information from the source network device.

Optionally, in the example not being part of the invention, the target network device is a target core network device and the source network device is a source core network device. Optionally, the target network device is a target PLMN device and the source network device is a source PLMN device. Optionally, the target network device is a target access network device and the source network device is a source access network device.

In the example of the invention, the terminal device is a terminal device in an RRC inactive state.

It is to be understood that the terminal device 800 according to the example not being part of the invention may correspond to the terminal device in the method of the invention. The abovementioned and other operations and/or functions of each unit in the terminal device 800 are used to implement the corresponding flows executed by the terminal device in the method shown in FIG. 5 respectively and will not be elaborated herein for simplicity.

As shown in FIG. 12, an example not being part of the invention also provides a network device 900. The network device 900 may be the network device 600 in FIG. 9, and may be configured to execute contents executed by the network device in the method 300 shown in FIG. 3. The network device 900 includes an input interface 910, an output interface 920, a processor 930 and a memory 940. The input interface 910, the output interface 920, the processor 930 and the memory 940 may be connected through a bus system. The memory 940 is configured to store a program, an instruction or a code. The processor 930 is configured to execute the program, the instruction or the code in the memory 940 to control the input interface 910 to receive a signal, control the output interface 920 to send a signal and complete operations in the methods.

In such a manner, according to the network device in the example not being part of the invention, when a terminal device moves to a different PLMN or a different core network, context information of the terminal device may be directly acquired without performing handover with the terminal device, so as to recover a connection with the terminal device, so that power of the terminal is saved, a network overhead is reduced, and mobility performance of the terminal is further improved.

It is to be understood that, in the example not being part of the invention, the processor 930 may be a Central Processing Unit (CPU), and the processor 930 may also be another universal processor, a digital signal processor, an application specific integrated circuit, a field-programmable gate array or another programmable logic device, discrete gate or transistor logic device, discrete hardware component and the like. The universal processor may be a microprocessor. The processor may also be any conventional processor and the like.

The memory 940 may include a Read-Only Memory (ROM) and a Random Access Memory (RAM) and may provide an instruction and data for the processor 930. A portion of the memory 940 may further include a nonvolatile RAM. For example, the memory 940 may further store information of a device type.

In an implementation process, the contents of the method may be completed by an integrated logic circuit in a hardware form in the processor 930 or an instruction in a software form. The contents of the method disclosed in combination with the examples of the invention may be directly embodied to be executed and completed by a hardware processor or by a combination of software modules and hardware in the processor. The software module may be located in a mature storage medium in this field such as a RAM, a flash memory, a ROM, a programmable ROM or electrically erasable programmable ROM and a register. The storage medium is located in the memory 940. The processor 930 reads information in the memory 940 and completes the contents of the method in combination with the hardware therein. No more detailed descriptions will be made herein to avoid repetitions.

In a specific implementation, the first receiving unit in the network device 600 may be implemented by the input interface 910 in FIG. 12, the first to eighth sending unit in the network device 600 may be implemented by the output interface 920 in FIG. 12, and the acquisition unit in the network device 600 may be implemented by the processor 930 in FIG. 12.

As shown in FIG. 13, an example not being part of the invention also provides a network device 1000. The network device 1000 may be the network device 700 in FIG. 10, and may be configured to execute contents executed by the network device in the method 400 in FIG. 7. The network device 1000 includes an input interface 1010, an output interface 1020, a processor 1030 and a memory 1040. The input interface 1010, the output interface 1020, the processor 1030 and the memory 1040 may be connected through a bus system. The memory 1040 is configured to store a program, an instruction or a code. The processor 1030 is configured to execute the program, the instruction or the code in the memory 1040 to control the input interface 1010 to receive a signal, control the output interface 1020 to send a signal and complete operations in the methods.

In such a manner, according to the network device in the example not being part of the invention, when a terminal device moves to a different PLMN or a different core network, after a context acquisition request message sent by a target network device is received, context information of the terminal device is sent to the target network device to recover a connection between the terminal device and the network device, so that power of the terminal is saved, a network overhead is reduced, and mobility performance of the terminal is further improved.

It is to be understood that, in the example not being part of the invention, the processor 1030 may be a CPU and the processor 1030 may also be another universal processor, a digital signal processor, an application specific integrated circuit, a field-programmable gate array or another programmable logic device, discrete gate or transistor logic device, discrete hardware component and the like. The universal processor may be a microprocessor. The processor may also be any conventional processor and the like.

The memory 1040 may include a ROM and a RAM and may provide an instruction and data for the processor 1030. A portion of the memory 1040 may further include a nonvolatile RAM. For example, the memory 1040 may further store information of a device type.

In an implementation process, the contents of the method may be completed by an integrated logic circuit in hardware form in the processor 1030 or an instruction in a software form. The contents of the method disclosed in combination with the examples of the invention may be directly embodied to be executed and completed by a hardware processor or by a combination of software modules and hardware in the processor. The software module may be located in a mature storage medium in this field such as a RAM, a flash memory, a ROM, a programmable ROM or electrically erasable programmable ROM and a register. The storage medium is located in the memory 1040. The processor 1030 reads information in the memory 1040 and completes the contents of the method in combination with the hardware therein. No more detailed descriptions will be made herein to avoid repetitions.

In a specific implementation, the first to fifth receiving unit in the network device 700 may be implemented by the input interface 1010 in FIG. 13, the first to fifth sending unit in the network device 700 may be implemented by the output interface 1020 in FIG. 13, and the first release unit and the second release unit in the network device 700 may be implemented by the processor 1030 in FIG. 13.

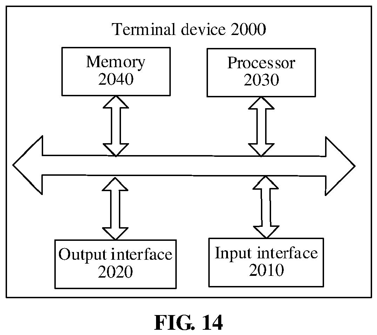

As shown in FIG. 14, an example not being part of the invention also provides a terminal device 2000. The terminal device 2000 may be the terminal device 800 in FIG. 11, and may be configured to execute contents executed by the terminal device in the method 500 in FIG. 8. The terminal device 2000 includes an input interface 2010, an output interface 2020, a processor 2030 and a memory 2040. The input interface 2010, the output interface 2020, the processor 2030 and the memory 2040 may be connected through a bus system. The memory 2040 is configured to store a program, an instruction or a code. The processor 2030 is configured to execute the program, the instruction or the code in the memory 2040 to control the input interface 2010 to receive a signal, control the output interface 2020 to send a signal and complete operations in the methods.

In such a manner, according to the terminal device in the example not being part of the invention, when the terminal device moves to a different PLMN or a different core network, the terminal device triggers a target access network device to acquire context information of the terminal device to recover a connection between the terminal device and the network device, so that power of the terminal is saved, a network overhead is reduced, and mobility performance of the terminal is further improved.

It is to be understood that, in the example not being part of the invention, the processor 2030 may be a CPU and the processor 2030 may also be another universal processor, a digital signal processor, an application specific integrated circuit, a field-programmable gate array or another programmable logic device, discrete gate or transistor logic device, discrete hardware component and the like. The universal processor may be a microprocessor. The processor may also be any conventional processor and the like.

The memory 2040 may include a ROM and a RAM and may provide an instruction and data for the processor 2030. A portion of the memory 2040 may further include a nonvolatile RAM. For example, the memory 2040 may further store information of a device type.

In an implementation, the contents of the method may be completed by an integrated logic circuit in hardware form in the processor 2030 or an instruction in a software form. The contents of the method disclosed in combination with the examples of the invention may be directly embodied to be executed and completed by a hardware processor or by a combination of software modules and hardware in the processor. The software module may be located in a mature storage medium in this field such as a RAM, a flash memory, a ROM, a programmable ROM or electrically erasable programmable ROM and a register. The storage medium is located in the memory 2040. The processor 2030 reads information in the memory 2040 and completes the contents of the method in combination with the hardware therein. No more detailed descriptions will be made herein to avoid repetitions.

In a specific implementation, the receiving unit in the terminal device 800 may be implemented by the output interface 2010 in FIG. 14, and the triggering unit, release unit and determination unit in the terminal device 800 may be implemented by the processor 2030 in FIG. 14.

Those of ordinary skill in the art may realize that the units and algorithm steps of each example described in combination with the examples disclosed in the invention may be implemented by electronic hardware or a combination of computer software and the electronic hardware. Whether these functions are executed in a hardware or software manner depends on specific applications and design constraints of the technical solutions. A person skilled in the art may use different methods to implement the described functions for each specific application, and such implementation shall fall within the scope of the invention.

Those skilled in the art may clearly understand that specific working processes of the system, device and unit described above may refer to the corresponding processes in the method example and will not be elaborated herein for convenient and brief description.

In some examples provided by the invention, it is to be understood that the disclosed system, device and method may be implemented in another manner. For example, the device example described above is only schematic, and for example, division of the units is only logic function division, and other division manners may be adopted during practical implementation. For example, multiple units or components may be combined or may be integrated into another system, or some characteristics may be ignored or not executed. In addition, the coupling, direct coupling or communication connection illustrated or discussed herein may be indirect coupling or communication connection implemented through some interfaces, devices or units, and may be electrical, mechanical or connection in other forms.

The units described as separate parts may or may not be physically separated, and the part displayed as a unit may or may not be a physical unit, and namely may be located in the same place, or may also be distributed to multiple network units. Part or all of the units may be selected to achieve the purpose of the solutions of the examples according to a practical requirement.

In addition, each functional unit in each example not being part of the invention may be integrated into a processing unit, each unit may also physically exist separately, and two or more than two units may also be integrated into a unit.

When being implemented in the form of a software functional unit and sold or used as an independent product, the function may also be stored in a computer-readable storage medium. Based on such understanding, the substance of the technical solutions of the invention, or parts making contributions to the conventional art or part of the technical solutions may be embodied in form of a software product, and the computer software product is stored in a storage medium, including a plurality of instructions configured to enable a computer device (which may be a personal computer, a server, a network device or the like) to execute all or part of the steps of each example of the invention. The storage medium includes various media capable of storing program codes such as a U disk, a mobile hard disk, a ROM, a RAM, a magnetic disk or an optical disk.

Disclosed above are merely several specific examples of the invention and not intended to limit the scope of protection of the invention. Any variations or replacements apparent to those skilled in the art within the technical scope disclosed by the invention shall fall within the scope of protection of the invention. Therefore, the scope of protection of the invention shall be subject to the scope of protection of the claims.

## Claims

1. A communication method, carried out at a target network device, the method comprising:
acquiring, by the target network device, context information of a terminal device under a trigger of the terminal device when the terminal device in a Radio Resource Control, RRC, inactive state moves from a source Public Land Mobile Network, PLMN, to a target PLMN or moves from a source core network to a target core network, wherein the acquiring comprises receiving, by the target network device, the context information of the terminal device sent by the terminal device, and the target network device is a target core network device included in the target core network or a target PLMN device included in the target PLMN;
performing (S320), by the target network device, communication with the terminal device according to the context information; **characterized by**
after receiving, by the target network device, the context information sent by the terminal device,
sending, by the target network device, first indication information to the terminal device, wherein the first indication information is to instruct the terminal device to release the context information.

2. The method of claim 1, further comprising:
after receiving, by the target network device, the context information of the terminal device,
sending, by the target network device, second indication information to the terminal device, wherein the second indication information is to indicate that the target network device has acquired the context information.

3. A communication method, carried out at a terminal device, the method comprising:
when the terminal device in a Radio Resource Control, RRC, inactive state moves from a source Public Land Mobile Network, PLMN, to a target PLMN or moves from a source core network to a target core network in response to the terminal device determining that the target PLMN or the target core network that it is currently moving to is different from the previous source PLMN or the previous source core network, triggering, by the terminal device, a target network device to acquire context information of the terminal device, wherein the triggering comprises sending, by the terminal device, the context information of the terminal device to the target network device, and the target network device is a target core network device included in the target core network or a target PLMN device included in the target PLMN; **characterized by**
after sending, by the terminal device, the context information of the terminal device to the target network device,
receiving, by the terminal device, first indication information sent by the target network device, wherein the first indication information is to instruct the terminal device to release the context information; and
releasing, by the terminal device, the context information according to the first indication information.

4. A target network device, configured to perform the method of claim 1 or 2.

5. A terminal device, configured to perform the method of claim 3.

## Patentansprüche

1. Kommunikationsverfahren, das von einer Zielnetzwerkvorrichtung ausgeführt wird, wobei das Verfahren umfasst:
Erfassen, durch die Zielnetzwerkvorrichtung, von Kontextinformationen einer Endgerätevorrichtung unter einem Trigger der Endgerätevorrichtung, wenn sich die Endgerätevorrichtung in einem inaktiven Zustand einer Funkressourcensteuerung (Radio Resource Control, RRC), von einem öffentlichen landgestützten Quellenmobilfunknetzwerk (Source Public Land Mobile Network, Quellen-PLMN) zu einem Ziel-PLMN bewegt oder sich von einem Quellenkernnetzwerk zu einem Zielkernnetzwerk bewegt, wobei das Erfassen, ein Empfangen, in der Zielnetzwerkvorrichtung, der Kontextinformationen der Endgerätevorrichtung umfasst, die von der Endgerätevorrichtung gesendet werden, und wobei die Zielnetzwerkvorrichtung eine Zielkernnetzwerkvorrichtung, die in dem Zielkernnetzwerk enthalten ist, oder eine Ziel-PLMN-Vorrichtung ist, die in dem Ziel-PLMN enthalten ist;
Durchführen (S320), durch die Zielnetzwerkvorrichtung, einer Kommunikation mit der Endgerätevorrichtung gemäß den Kontextinformationen; **gekennzeichnet durch**:
nach dem Empfangen, in der Zielnetzwerkvorrichtung, der Kontextinformationen, die von der Endgerätevorrichtung gesendet werden,
Senden von ersten Anzeigeinformationen von der Zielnetzwerkvorrichtung zu der Endgerätevorrichtung, wobei die ersten Anzeigeinformationen dazu dienen, die Endgerätevorrichtung anzuweisen, die Kontextinformationen freizugeben.

2. Verfahren nach Anspruch 1, das außerdem umfasst:
nach dem Empfangen, in der Zielnetzwerkvorrichtung, der Kontextinformationen der Endgerätevorrichtung,
Senden von zweiten Anzeigeinformationen von der Zielnetzwerkvorrichtung zu der Endgerätevorrichtung, wobei die zweiten Anzeigeinformationen dazu dienen, anzuzeigen, dass die Zielnetzwerkvorrichtung die Kontextinformationen erfasst hat.

3. Kommunikationsverfahren, das von einer Endgerätevorrichtung ausgeführt wird, wobei das Verfahren umfasst:
wenn sich die Endgerätevorrichtung in einem inaktiven Zustand einer Funkressourcensteuerung (Radio Resource Control, RRC) von einem öffentlichen landgestützten Quellenmobilfunknetzwerk (Source Public Land Mobile Network, Quellen-PLMN) zu einem Ziel-PLMN bewegt oder sich von einem Quellenkernnetzwerk zu einem Zielkernnetzwerk bewegt, als Reaktion darauf, dass die Endgerätevorrichtung ermittelt, dass das Ziel-PLMN oder das Zielkernnetzwerk, in das sie sich aktuell bewegt, verschieden ist von dem vorherigen Quellen-PLMN oder dem vorherigen Quellenkernnetzwerk, Triggern, durch die Endgerätevorrichtung, dass eine Zielnetzwerkvorrichtung die Kontextinformationen der Endgerätevorrichtung erfasst, wobei das Triggern ein Senden der Kontextinformationen der Endgerätevorrichtung von der Endgerätevorrichtung zu der Zielnetzwerkvorrichtung umfasst, und wobei die Zielnetzwerkvorrichtung eine Zielkernnetzwerkvorrichtung, die in dem Zielkernnetzwerk enthalten ist, oder eine Ziel-PLMN-Vorrichtung ist, die in dem Ziel-PLMN enthalten ist; **gekennzeichnet durch**:
nach dem Senden der Kontextinformationen der Endgerätevorrichtung von der Endgerätevorrichtung zu der Zielnetzwerkvorrichtung,
Empfangen, in der Endgerätevorrichtung, von ersten Anzeigeinformationen, die von der Zielnetzwerkvorrichtung gesendet werden, wobei die ersten Anzeigeinformationen dazu dienen, die Endgerätevorrichtung anzuweisen, die Kontextinformationen freizugeben; und
Freigeben, durch die Endgerätevorrichtung, der Kontextinformationen gemäß den ersten Anzeigeinformationen.

4. Zielnetzwerkvorrichtung, die konfiguriert ist zum Durchführen des Verfahrens nach einem der Ansprüche 1 bis 2.

5. Endgerätevorrichtung, die konfiguriert ist zum Durchführen des Verfahrens nach Anspruch 3.

## Revendications

1. Procédé de communication, exécuté au niveau d'un dispositif de réseau cible, le procédé comprenant les étapes suivantes :
acquérir, par le dispositif de réseau cible, des informations de contexte d'un dispositif terminal sous un déclencheur du dispositif terminal lorsque le dispositif terminal dans un état inactif de contrôle des ressources radio, RRC, se déplace d'un réseau mobile terrestre public, PLMN, source vers un PLMN cible, ou se déplace d'un réseau central source vers un réseau central cible, où l'acquisition comprend la réception, par le dispositif de réseau cible, des informations de contexte du dispositif terminal envoyées par le dispositif terminal, et le dispositif de réseau cible est un dispositif de réseau central cible inclus dans le réseau central cible ou un dispositif PLMN cible inclus dans le PLMN cible ;
effectuer (S320), par le dispositif de réseau cible, une communication avec le dispositif terminal selon les informations de contexte ; **caractérisé par**
après réception, par le dispositif de réseau cible, des informations de contexte envoyées par le dispositif terminal,
l'envoi, par le dispositif de réseau cible, de premières informations d'indication au dispositif terminal, où les premières informations d'indication sont destinées à donner pour instruction au dispositif terminal de libérer les informations de contexte.

2. Procédé selon la revendication 1, comprenant en outre :
après réception, par le dispositif de réseau cible, des informations de contexte du dispositif terminal,
l'envoi, par le dispositif de réseau cible, des secondes informations d'indication au dispositif terminal, où les secondes informations d'indication sont destinées à indiquer que le dispositif de réseau cible a acquis les informations de contexte.

3. Procédé de communication, exécuté au niveau d'un dispositif terminal, le procédé comprenant :
lorsque le dispositif terminal dans un état inactif de contrôle des ressources radio, RRC, se déplace d'un réseau mobile terrestre public source, PLMN, vers un PLMN cible, ou se déplace d'un réseau central source vers un réseau central cible en réponse au dispositif terminal déterminant que le PLMN cible ou le réseau central cible vers lequel il se déplace actuellement est différent du PLMN source précédent ou du réseau central source précédent, le déclenchement, par le dispositif terminal, d'un dispositif de réseau cible pour acquérir des informations de contexte du dispositif terminal, où le déclenchement comprend l'envoi, par le dispositif terminal, des informations de contexte du dispositif terminal au dispositif de réseau cible, et le dispositif de réseau cible est un dispositif de réseau central cible inclus dans le réseau central cible ou un dispositif de PLMN cible inclus dans le PLMN cible ; **caractérisé par** :
après l'envoi, par le dispositif terminal, des informations de contexte du dispositif terminal au dispositif de réseau cible,
la réception, par le dispositif terminal, de premières informations d'indication envoyées par le dispositif de réseau cible, où les premières informations d'indication sont destinées à donner pour instruction au dispositif terminal de libérer les informations de contexte ; et
la libération, par le dispositif terminal, des informations de contexte conformément aux premières informations d'indication.

4. Dispositif de réseau cible, configuré pour exécuter le procédé de la revendication 1 ou 2.

5. Dispositif terminal, configuré pour exécuter le procédé de la revendication 3.
